# EUROPÄISCHE PATENTSCHRIFT

(11) **EP 0 827 244 B1**
(45) Veröffentlichungstag und Bekanntmachung des Hinweises auf die Patenterteilung: **17.12.2003**
(21) Anmeldenummer: 97112266.8
(22) Anmeldetag: 17.07.1997
(51) Int. Cl.: H02B 1/28, B29C 65/76

(54) **Kunststoffgehäuse in der Zündschutzart "Druckfeste Kapselung"**
Plastic housing being spark proof and pressure resistant
Boîtier en plastique anti-étincelle et antidéflagrant

(30) Priorität: 28.08.1996 DE 19634673
(43) Veröffentlichungstag der Anmeldung: 04.03.1998
(73) Patentinhaber: R. Stahl Schaltgeräte GmbH, D-74653 Künzelsau (DE)
(72) Erfinder: Leischner, Manfred, 74653 Künzelsau (DE); Pilz, Dieter, 74632 Neuenstein (DE); Limbacher, Bernd, 74523 Schwäbisch Hall (DE)
(74) Vertreter: Patentanwälte Rüger, Barthelt & Abel

(56) Entgegenhaltungen:
- DE-A- 2 921 361
- DE-A- 3 612 975
- DE-A- 3 619 051
- DE-U- 1 768 265

## Beschreibung

Die Zündschutzart "Druckfeste Kapselung" ist eine Zündschutzart, bei der elektrische Betriebsmittel und andere Geräte in einem geschlossenen Gehäuse untergebracht sind. Das Gehäuse muß bestimmten Prüfbedingungen standhalten. Unter anderem muß sichergestellt sein, daß bei einer Entzündung eines zündfähigen Gasgemisches in dem Gehäuse keine Partikel und keine heißen Gase nach außen gelangen können, die die Atmosphäre in der Umgebung des Gehäuses gegebenenfalls zünden können, falls auch dort ein zündfähiges Gasgemisch vorhanden ist. Diese Bedingung des Zurückhaltens von zündfähigen Partikeln und heißen Gasen kann erreicht werden, wenn der Deckel des Gehäuses mit dem Gehäuse einen sogenannten "Ex-Spalt" bildet. Bei der Passage durch den "Ex-Spalt" werden die Partikel und Gase ausreichend gekühlt, um außerhalb des Gehäuses keinen Schaden mehr anrichten zu können.

Damit der "Ex-Spalt" seine Funktion erfüllen kann, muß er hinreichend eng und lang sein, wobei über die Zeit sich die Spaltweite auf keinen Fall vergrößern darf. Insbesondere die Spaltweite ist hierbei ein wesentliches Kriterium, das bei großen Volumina bislang lediglich mit aus Metall gefertigten Gehäusen hinreichend eingehalten werden konnte. Aus Kunststoff gespritzte Gehäuse leiden unter dem Problem, daß die Gehäuseabmessungen in dem Bereich der Trennfuge zwischen Unter- und Oberteil oder Gehäuse und Deckel so starken Werkstoff- und verfahrensbedingten Toleranzen unterliegen, daß dort die Bedingungen für einen "Ex-Spalt" nicht eingehalten werden konnten.

Bisher war man deswegen gezwungen, bei aus Kunststoff hergestellten Gehäusen die Zündschutzart "Druckfeste Kapselung" dadurch herzustellen, daß Ober- und Unterteil des Gehäuses an der Trennfuge stoff.schlüssig mit einer Vergußmasse miteinander verbunden werden. Damit ist das Gehäuse aber dauerhaft verschlossen und die elektrischen Betriebsmittel im Inneren des Gehäuses können nur erreicht werden, wenn das Gehäuse zerstört wird. Durckfeste gehäuse sind z.B. aus DE 17 68 265 U bekannt.

Ausgehend hiervon ist es Aufgabe der Erfindung, ein Kunststoffgehäuse in der Zündschutzart "Druckfeste Kapselung" zu schaffen, das beliebig oft zu öffnen und zu schließen ist. Ferner ist es Aufgabe der Erfindung, ein Verfahren zur Herstellung eines solchen Gehäuses anzugeben.

Diese Aufgabe wird erfindungsgemäß durch das Gehäuse mit den Merkmalen der Patentansprüche 1 oder 2 bzw. den Verfahren mit den Merkmalen der Patentansprüche 21, 22 oder 23 gelöst.

Mit Hilfe der Beschichtung, die den an sich vorhandenen spaltförmigen Raum in der Trennfuge des Gehäuses weitgehend ausfüllt, können Bedingungen geschaffen werden, so daß die Trennfuge zu einem "Ex-Spalt" wird. Die bei der Fertigung der Gehäuseteile unvermeidbaren Maßtoleranzen im Bereich der Trennfuge werden durch die nachträglich eingebrachte Beschichtung vollständig kompensiert. Gleichgültig, wie die Abmessungen der Fugenflächen an der Trennfuge sind, ist die freie Fläche der Beschichtung immer ein exaktes negatives Abbild der Kontur der damit zusammenwirkenden anderen Fläche des anderen Gehäuseteils.

Dabei spielt es für die Ausführung der Erfindung keine Rolle, ob die Fugenfläche eine gerade Fläche ist, in dem Sinne, daß die Erzeugende eine Gerade ist, oder ob die Erzeugende der Fugenfläche eine V- oder U-förmige gebogenene Linie ist, so daß die Fugenfläche von den Wänden und dem Boden einer Nut bzw. den Wänden und der Stirnfläche einer Rippe oder Leiste gebildet ist. Lediglich bei der Herstellung ergeben sich geringfügige Abweichungen insofern, als die eine Ausführungsform spezielle Dichtmittel bedingen kann, um das Eindringen des flüssigen, die Beschichtung bildenden Mittels zu verhindern oder nicht.

Eine nutenförmige Fugenfläche ist bei entsprechender Auslegung ohnehin weitgehend rinnenförmig und verhindert von sich aus das Eindringen des flüssigen Beschichtungsmittels in das Innere des Gehäuses bei der Herstellung. Außerdem kann sie auch mit pastöser Masse vor dem Eindrücken des anderen Gehäuseteils gefüllt werden. Der Spalt braucht damit nicht in einer Ebene zu liegen.

Unter Umständen kann es sogar zweckmäßig sein, diese Beschichtung an einem der Gehäuseteile unter Verwendung einer ersten Vorform herzustellen und für das andere Gehäuseteil gegebenenfalls eine komplementäre Vorform zu verwenden und eine weitere Beschichtung an dem anderen Gehäuseteil zu erzeugen. Die so hergestellten Gehäuseteile lassen sich dann beliebig paaren, unter der Voraussetzung, daß die beiden Vorformen exakt unter Einhaltung der Bedingungen für "Ex-Spalte" ineinanderpassen.

Beispielsweise im Falle einer auf einer Feder oder Rippe sitzenden Beschichtung stellt die Außenkontur der Beschichtung die exakte Negativkopie der Nutwand des anderen Gehäuseteils dar. Da diese Beschichtung nach dem Aushärten und Erkalten gegebenenfalls auch nach dem künstlichen Altern der Kunststoffgehäuseteile angebracht wird, ist sie weitgehend spannungsfrei, d.h. ihre Außengestalt wird sich über die Zeit nicht verändern, womit die Stoßstelle oder Trennfuge zwischen den Gehäuseteilen auf Dauer die Bedingungen des "Ex-Spaltes" erfüllen wird. Die nachträglich aufgebrachte Beschichtung verändert die Gestalt weder der Nut noch der Rippe und, da sie im geschlossenen Zustand des Gehäuses aushärtet, treten auch im späteren Gebrauch keine Spannungen in der Trennfuge auf.

Bei dem neuen Gehäuse kann sowohl das Gehäuseoberteil als auch das Gehäuseunterteil an der Trennfuge die Nut enthalten, während das jeweils andere Gehäuseteil an der Trennfuge mit der Rippe versehen ist, die in die Nut hineinragt. Ebenso spielt es für das Grundprinzip keine Rolle, ob die Beschichtung nun mit der Wand der Nut oder mit der Wand der Rippe stoffschlüssig verbunden ist.

Die Beschichtung besteht aus einer Masse, die zum Zeitpunkt des Aufbringens fließfähig ist, d.h. sie muß in der Lage sein, beim Eindrücken der Rippe in die Nut in den zwischen der Nut und der Rippe vorhandenen spaltförmigen Raum einzufließen. "Fließfähigkeit" bedeutet dabei nicht notwendigerweise flüssig, damit die Masse aufgrund der Schwerkraft von alleine ins Fließen gerät. Insoweit erfüllen auch pastös eingestellte Materialien die Bedingung "fließfähig".

Eine derartige Masse, die von alleine nicht wegfließt, ist beispielsweise zweckmäßig, wenn die Nut aus irgendwelchen anderen gestalterischen Gründen keine in einer Ebene liegende Rinne bildet, sondern Absätze und Niveauunterschiede aufweist.

Um ein unwillentliches Ablösen der Beschichtung von demjenigen Gehäuseteil zu verhindern, an dem die Beschichtung an sich stoffschlüssig sitzen soll, ist es von Vorteil, wenn dieser betreffende Teil gegebenenfalls im Sinne einer besseren Haftung der Beschichtung vorbehandelt wird. Eine solche Vorbehandlung kann im Aufrauhen, beispielsweise durch Sandstrahlen, oder einer Redox-Behandlung oder dem Aufbringen eines Haftvermittlers bestehen.

Um keine Probleme mit der Dichtigkeit des Gehäuses zu bekommen, sind zweckmäßigerweise die Gehäuseschrauben, mit denen die Gehäuseteile zusammengehalten sind, in einem Bereich außerhalb des durch die Nut umgrenzten Bereiches angeordnet.

Um das neue Gehäuse herzustellen, ist vorgesehen, das Gehäuseteil mit der Nut in eine Stellung zu bringen, in der die Nut nach oben offen ist. Sodann wird die Nut mit der fließfähigen Masse gefüllt, woraufhin das Gehäuse geschlossen wird. Die in der Nut vorhandene fließfähige Masse für die Beschichtung wird von der einbringenden Rippe verdrängt und steigt dadurch in dem spaltförmigen Raum zwischen der Rippe und den Seitenwänden auf. Um ein Überlaufen der Nut zu vermeiden, ist zweckmäßigerweise die Menge der fließfähigen Masse so bemessen, daß nach dem Schließen des Gehäuses derartige Überlaufvorgänge nicht auftreten.

Im übrigen sind Weiterbildungen der Erfindung Gegenstand von Unteransprüchen.

In der Zeichnung ist ein Ausführungsbeispiel des Gegenstands der Erfindung dargestellt. Es zeigen:
Fig. 1 ein aus Duroplast hergestelltes Kunstoffgehäuse in der Zündschutzart "Druckfeste Kapselung",
Fig. 2 das Ober- und das Unterteil des Gehäuses nach Fig. 1, jeweils in einer Draufsicht auf die Trennfuge,
Fig. 3 das Gehäuse nach Fig. 1, geschnitten längs der Linie III-III nach Fig. 1,
Fig. 4 einen Ausschnitt aus dem Gehäuse nach Fig. 1, geschnitten längs einer Linie IV-IV nach Fig. 2,
Fig. 5 den mit A bezeichneten Ausschnitt aus Fig. 3, in einer vergrößerten Darstellung,
Fig. 6 Schritte während des Herstellens des Gehäuses nach Fig. 1,
Fig. 7 eine Ausführungsform, bei der in keinem der Gehäuseteile eine Nut zur Aufnahme der flüssigen Masse vorhanden ist, in einem Längsschnitt und in zwei unterschiedlichen Relativtellungen der Gehäuseteile, und
Fig. 8 und 9 eine Ausführungsform, bei der die Gehäusteile unter Verwendung von Vorformen hergestellt werden.

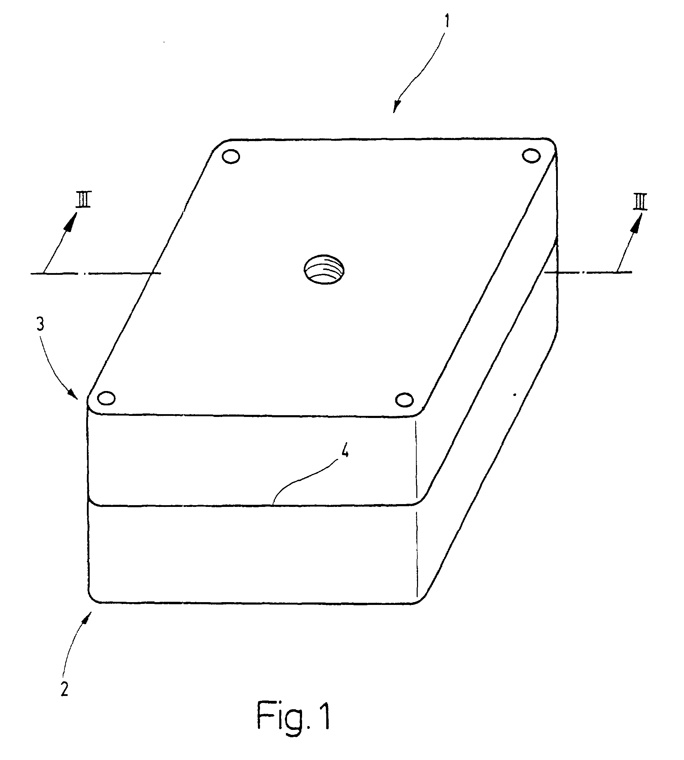

Fig. 1 zeigt ein etwa quaderförmiges Kunststoffgehäuse 1, das in der Zündschutzart "Druckfeste Kapselung" ausgeführt ist. Das Gehäuse 1 besteht aus einem Gehäuseunterteil 2 sowie einem Gehäuseoberteil 3. Bei dem gezeigten Ausführungsbeispiel sind das Gehäuseunterteil 2 und das Gehäuseoberteil 3 etwa schalen- oder becherförmig und stoßen an einer Trennfuge 4, die um den Umfang des Gehäuses 1 herumläuft, zusammen.

Das druckfeste Gehäuse 1 ist in Fig. 1 stark vereinfacht wiedergegeben, insofern, als alle Dinge, die für das Verständnis der Erfindung nicht wesentlich sind, weggelassen sind. Hierzu gehören beispielsweise Kabeldurchführungen, äußere Anschlußklemmen in der Zündschutzart "Erhöhte Sicherheit" u.dgl. mehr.

Das schalen- oder becherförmige Gehäuseunterteil 2 ist von einem Boden 5 und insgesamt vier von dem Boden 5 aufragenden Seitenwänden 6, 7, 8 und 9 begrenzt, die sowohl mit dem Boden 5 einstückig sind als auch an abgegrundeten Eckenkanten 11 einstückig ineinander übergehen. An ihrem von dem Boden 5 abliegenden Ende sind die vier Seitenwände 6, 7, 8 und 9 in gleicher Höhe von einer in einer Ebene liegenden, rechteckförmigen Ringfläche 12 begrenzt. Diese Fläche 12 ist der an dem Gehäuseunterteil 2 sitzende Teil der Trennfuge 4.

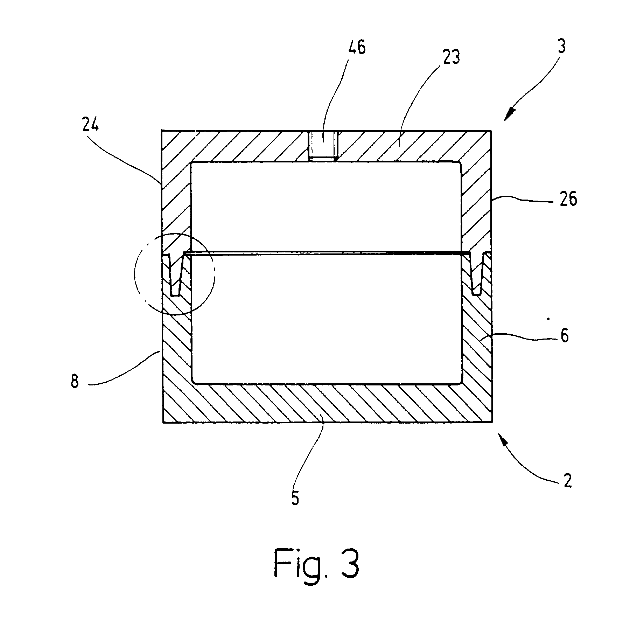

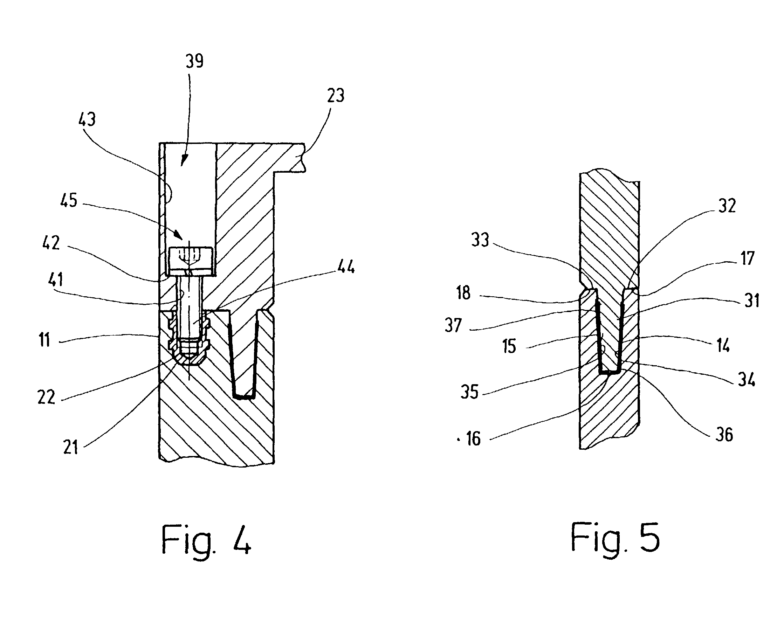

Ausgehend von der ebenen ringförmigen Fläche 12, die den Innenraum des Gehäuseuntersatzes 2 umgrenzt, ist in die Seitenwände 6...9 eine durchgehende, in sich geschlossene Nut 13 eingearbeitet, wie dies die Fig. 3 und 5 erkennen lassen. Sie ist ein weiterer Bestandteil der Trennfuge 4. Die Nut 13 ist von Wänden in Gestalt von zwei Nutenflanken 14 und 15 sowie einem im wesentlichen ebenen Nutengrund 16 begrenzt. Die Nutenflanken 14, 15 bilden zusammen mit dem Nutengrund 16 eine erste Fugenfläche, die bei geschlossenem Gehäuse eine der Wände des Ex-Spalts darstellt. Die erste Fugenfläche ist über die Länge gesehen U- oder V-förmig gefaltet, d.h. ihre Erzeugende ist eine U- oder V-förmig gebogene Linie.

Infolge der Nut 13 wird die ringförmige Fläche 12 in zwei zueinander konzentrische ringförmig geschlossene Flächen 17 und 18 aufgeteilt. Die beiden Nutenflanken 14 und 15 sind gerade Flächen in dem Sinne, daß ihre Erzeugende eine Gerade ist und außerdem konvergieren die beiden Nutenflanken 14 und 15, ausgehend von der Fläche 13, in Richtung auf den Nutengrund 16. Die Nut 13 ist frei von irgendwelchen Hinterschneidungen.

Die Nut 13 hat somit einen etwa trapezförmigen Querschnitt und bildet eine in sich geschlossene Rinne, die in einer Ebene liegt, in dem Sinne, daß einander entsprechende Punkte längs der Nut jeweils in einer Ebene liegen. So liegen beispielsweise sämtliche Punkte des Nutengrundes 16 in einer Ebene, die zu den beiden Teilflächen 17 und 18 parallel ist, womit folglich die Nut 13 an allen Stellen die gleiche Tiefe hat.

In ihrem Verlauf folgt die Nut 13 nicht exakt der Außenkontur des Gehäuseunterteils 2. Sie springt im Bereich der Eckenkanten 11 gegenüber der Außenkontur deutlich zurück, so daß etwa dreieckförmige Bereiche 19 entstehen. In diesen dreieckförmigen Bereichen 19 sind, wie Fig. 4 erkennen läßt, Gewindebuchsen 21 eingespritzt. Diese Gewindebuchsen 21 befinden sich außerhalb des von der in sich geschlossenen Nut 13 umgrenzten Fläche. Die Gewindebuchsen 21 enthalten eine Gewindebohrung 22, deren Achse zu der Eckenkante 11 parallel ist.

Das Gehäuseoberteil 3 hat einen Aufbau, der im wesentlichen mit dem Aufbau des Gehäuseunterteils 2 übereinstimmt. So wird das Gehäuseoberteil 3 von einer Oberseite 23 und vier Seitenwänden 24, 25, 26, 27 gebildet, die mit der Oberseite 23 einstückig sind und an abgerundeten Eckenkanten 28 einstückig ineinander übergehen. An ihrem von der Oberseite 23 abliegenden Ende sind die Seitenwände 24...27 von einer ebenen Ringfläche 29 begrenzt, die zu dem an dem Gehäuseoberteil 3 befindlichen Teil der Trennfuge 4 gehört und bei geschlossenem Gehäuse 1 deckungsgleich mit der ringförmigen ebenen Fläche 12 ist.

Im Unterschied zu der Ringfläche 12 ist die Ringfläche 29 mit einer Rippe 31 versehen, wie dies Fig. 5 erkennen läßt. Auch diese Rippe 31 ist Teil der Trennfuge 4 und sie erhebt sich aus der Ringfläche 29, wodurch die Ringfläche 29 in zwei zueinander konzentrische Ringflächen 32 und 33 aufgeteilt wird. Die Rippe 31, die in sich geschlossen endlos ist, wird von Wänden in Gestalt von zwei seitlichen Flanken 34 und 35 sowie einer Stirnfläche 36 begrenzt. Die beiden seitlichen Flanken 34 und 35 sind gerade Flächen, in dem Sinne, daß ihre Erzeugende eine Gerade ist. Sie konvergieren, ausgehend von der ringförmigen Fläche 29, in Richtung auf ihre Stirnseite 16. Hierdurch bekommt die Rippe 31 einen trapezförmigen Querschnitt.

Die seitlichen Flanken 34, 35 bilden zusammen mit der Stirnfläche 36 eine zweite Fugenfläche, die bei geschlossenem Gehäuse die andere Wand des Ex-Spalts darstellt. Die zweite Fugenfläche ist über die Länge gesehen U- oder V-förmig gefaltet, d.h. ihre Erzeugende ist eine U- oder V-förmig gebogene Linie.

Die Lage der Rippe 31 an dem Gehäuseoberteil 3 ist derart, daß bei geschlossenem Gehäuse 1 die Rippe 31 in die Nut 13 eintaucht. Außerdem ist ihr Querschnitt gegenüber der Nut 13 kleiner, wodurch zwischen den Wänden also den Flanken 14 und 15 bzw. dem Boden 16 der Nut 13 und den Wänden also den Flanken 35 und 36 bzw. der Stirnfläche 36 der Rippe 31 ein spaltförmiger Freiraum verbleibt, der, im Querschnitt gesehen, etwa U-förmig ist. Dieser spaltförmige Freiraum hat eine Dicke, gemessen senkrecht zwischen den Flanken 15 und 35 bzw. 14 und 34, von zwischen 0,5 mm und 1,5 mm, gegebenenfalls auch bis zu 4 mm. Der spaltförmige Freiraum wird bei dem fertigen Gehäuse 1 von einer formstabilen Beschichtung 37 weitestgehend ausgefüllt, die entweder an den Wänden 14, 15 und 16 der Nut 13 oder an den Wänden 34, 35 und 36 der Rippe 31 stoffschlüssig anhaftet.

Ehe auf das Herstellungsverfahren der Beschichtung 37 im einzelnen eingegangen wird, sei der Vollständigkeit halber noch erwähnt, daß auch das Gehäuseoberteil 3 in der Nähe der Eckenkanten 28 dreieckförmige Bereiche 38 aufweist, an denen die Rippe 31 gegenüber der Eckenkante 28 zurückspringt. In diesem dreieckförmigen Bereich 38 ist bei jeder Eckenkante 28 eine Stufenbohrung 39 enthalten, die bei geschlossenem Gehäuse 1 mit der Gewindebohrung 22 fluchtet. Die Stufenbohrung 39 besteht aus einem Abschnitt 41 mit kleinerem Durchmesser, der an einer Ringschulter 42 in einen Abschnitt 43 mit größerem Durchmesser übergeht. Der Durchmesser des Abschnittes 41 ist so gewählt, daß mit geringem Spiel ein Gewindeschaft 44 einer Kopfschraube 45 hindurchpaßt, während der Abschnitt 43 mit dem größeren Durchmesser etwas größer ist als der Kopf der Kopfschraube 45. Das Gehäuse 1 weist somit im gezeigten Fall vier Schrauben 45 auf, die das Gehäuseoberteil 3 auf dem Gehäuseunterteil 2 befestigen.

Schließlich enthält die Oberseite 23 noch eine bei Gehäusen der Zündschutzart "Druckfeste Kapselung" übliche Prüfbohrung 46.

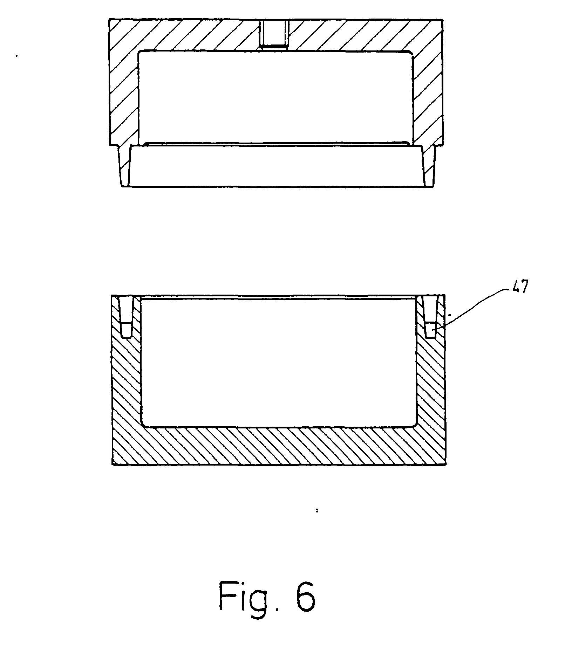

Die Herstellung des explosionsgeschützten Gehäuses 1 ist nachfolgend anhand von Fig. 6 beschrieben:

Es werden zunächst im Spritzgußverfahren ein Gehäuseunterteil 2 und ein Gehäuseoberteil 3 hergestellt. Diese Gehäuseteile 2, 3 läßt man vollständig auskühlen und unterwirft sie gegebenenfalls einem künstlichen Alterungsprozeß, um einen späteren Schwund der Gehäuseabmessungen zu vermeiden.

Vor der Herstellung der Beschichtung 37 werden die Flanken 34 und 35 sowie die Stirnfläche 36 derart vorbehandelt, daß das Material der Beschichtung 37 sich stoffschlüssig mit der Rippe 31 verbinden kann. Die Vorbehandlung kann in einem Aufrauhen der Oberfläche, einer Beschichtung mit einem Haftvermittler oder einer Redox-Behandlung der Oberfläche bestehen.

Anschließend werden die Flanken 14 und 15 sowie der Grund 16 der Nut 13 mit einem Trennmittel z.B. einem Silikonöl versehen.

Nach diesen Vorbereitungsarbeiten wird ein Gehäuseunterteil 2 in der gezeigten Weise mit seinem Boden 5 auf eine ebene Unterlage gestellt. Anschließend wird eine abgemessene Menge eines fließfähigen Kunstharzes, beispielsweise ein Epoxidharz oder ein Polyesterharz, in die Nut 13 eingefüllt. Dieses eingefüllte fließfähige Kunstharz ist bei 47 veranschaulicht. Die Menge des eingefüllten Kunstharzes 47 entspricht dem Volumen des spaltförmigen freien Raums zwischen der Rippe 31 und der Nut 13. Die eingefüllte Menge wird demzufolge lediglich den untersten Bereich der Nut 13 ausfüllen.

Nachdem die fließfähige Kunstharzmasse in die Nut 13 eingefüllt wurde, wird das Gehäuseoberteil 3 auf das Gehäuseunterteil 2 aufgesetzt, und zwar in genau derselben Lage, die diese beiden Gehäuseteile 2, 3 später zueinander einnehmen sollen, d.h. möglichst so, daß die Rippe 31 sich an allen Stellen etwa mittig in der Nut 13 befindet. Mit anderen Worten, es wird angestrebt, daß an keiner Stelle eine unmittelbare Berührung zwischen der Nut 13 und der Rippe 31 zustandekommt. Die Tiefe des Eindringens der Rippe 31 in die Nut 13 wird durch die Anlage der Flächen 29 und 12 begrenzt.

Durch das Eindringen der Rippe 31 in die Nut 13 wird die in der Nut 13 enthaltene fließfähige Kunststoffmasse 47 verdrängt und füllt den konstruktiv vorgegebenen spaltförmigen Freiraum zwischen den Flanken der Nut 13 und den Flanken der Rippe 31. Der fließfähige Kunststoff 47 steigt somit in diesem Raum nach oben in Richtung auf die Fläche 12 auf.

Um zu erreichen, daß auch mit Sicherheit die Trennfuge 4 nach außen geschlossen ist, und auch auf keinen Fall das Gehäuseoberteil 3 auf dem fließfähigen Kuunststoff 47 aufschwimmt, wird, falls keine andere Vorrichtung zur Verfügung steht, das Gehäuse 1 mit Hilfe der Schrauben 45 zusammengeschraubt. Dieser geschlossene Zustand des Gehäuses 1 bleibt solange erhalten, bis mit Sicherheit die Kunststoffmasse 47 ausgehärtet ist. Nach erfolgtem Aushärten werden die zueinander gehörigen Gehäuseteile 2, 3 als zusammengehörig markiert und es werden die Schrauben 45 herausgedreht, um das Gehäuse 1 zu öffnen. Beim Öffnen verbleibt die formstabile Beschichtung 37 auf der Rippe 31, d.h. die eine Seite der Beschichtung 37 ist stoffschlüssig mit der Außenseite der Rippe 31 verbunden, während die andere Seite der Beschichtung 37, die von der Rippe 31 wegweist, ein getreues exaktes negatives Abbild oder negative Abformung der Innenkontur der Nut 13 darstellt. Da dieser Vorgang am fertigen Gehäuse stattfindet, und die Kunststoffmasse 47 zu Beginn des Verfahrens fließfähig gewesen ist, treten beim erneuten Schließen des Gehäuses in der Nut 13 keine Sprengwirkungen auf.

Wegen der exakten Abformung der Nut 13 durch die Beschichtung 37 wird nun zwischen dem Gehäuseoberteil 2 und dem Gehäuseunterteil 3 an der Trennfuge 4 ein "Spalt" . erzeugt, der die Bedingungen des "Ex-Spalts" erfüllt. Selbst wenn aufgrund schwankender Prozeßtemperaturen beim Spritzen der Gehäuseteile 2, 3 und unterschiedlichem Schwund Gestaltsabweichungen an der Nut 13 und der Rippe 31 auftreten sollten, werden diese Abweichungen durch die Beschichtung 37 vollständig kompensiert. Gleichgültig, wie die Herstellungstoleranzen sind, wird nach dem Aufbringen der Beschichtung 37 immer ein "Ex-Spalt" zwischen der Nut 13 und der Außenseite der Beschichtung 37 zustandekommen.

Bei dem beschriebenen Ausführungsbeispiel wurde davon ausgegangen, daß die Beschichtung stoffschlüssig auf der Rippe 31 und damit auf der zweiten Fugenfläche haftet. Es ist jedoch auch ohne weiteres möglich, die Beschichtung als Auskleidung der Nut 13 und somit auf der ersten Fugenfläche zu verwenden, während sich die Rippe von der Beschichtung 37 trennen kann. In diesem Falle wird die Rippe 31 mit dem Trennmittel behandelt, während die Wände 14, 15 und 16 der Nut in einer solchen Weise vorbehandelt werden, daß eine stoffschlüssige Verbindung zwischen dem Material des die Nut 13 enthaltenden Gehäuseteils 2, 3 und der fließfähigen Kunststoffmasse 47 zustandekommt.

Abweichend von der gezeigten, im wesentlichen ebenen Trennfuge 4 sind auch komplizierte andere Verlaufsformen der Trennfuge 4 denkbar. Beispielsweise wäre es denkbar, die Trennfuge gestuft auszuführen. In einem solchen Fall wird eine Kunststoffmasse 47 verwendet, die nicht dünnflüssig ist, sondern pastös fließfähig. Sie wird unter dem Einfluß der Schwerkraft nicht wegfließen und bleibt damit auch in schrägen Bereichen der Fuge an der gewünschten Stelle. Erst durch das Aufsetzen und Eindrücken des Gehäuseteils mit der Rippe wird sich die Kunststoffmasse 47 in den spaltförmigen freien Raum zwängen und verbreiten.

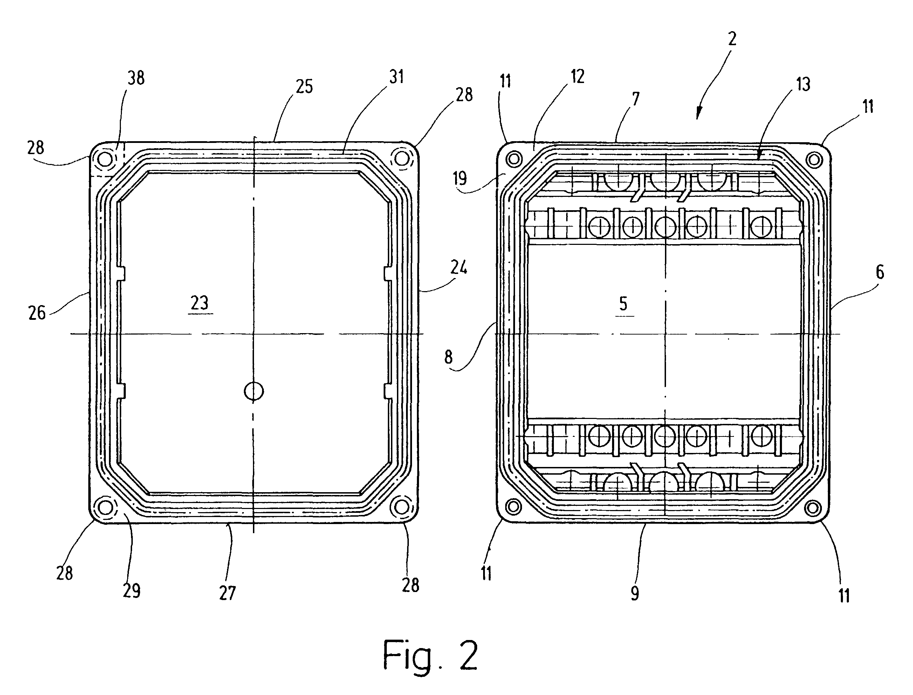

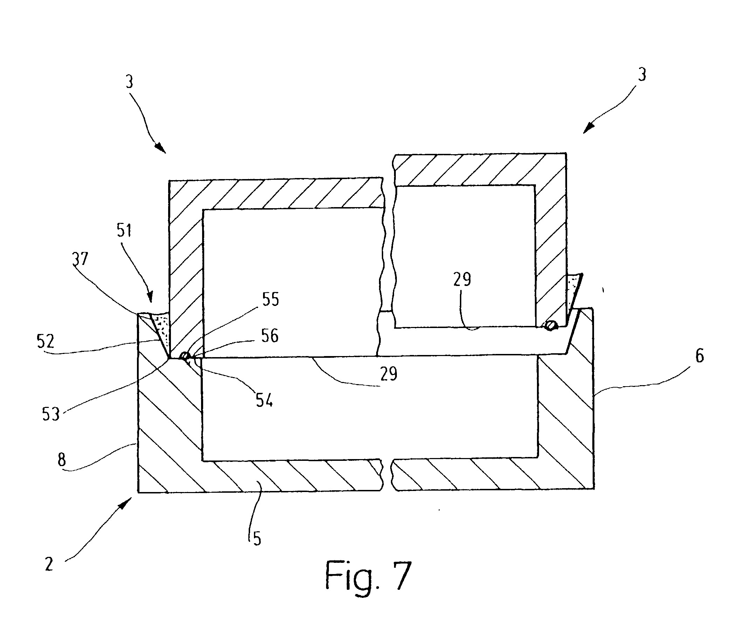

Bei dem zuvor anhand der Fig. 1 bis 6 erläuterten Ausführungsbeispiel war die erste Fugenfläche aus den Wänden und dem Grund einer Nut zusammengesetzt, während die zweite Fugenfläche von den Flanken und der Stirnfläche einer Rippe gebildet wurde. Diese Ausführungsform hat den Vorteil einer verhältnismäßig sehr einfachen Herstellung. Wie Fig. 7 zeigt, braucht die erste Fugenfläche keineswegs eine nutenförmige Gestalt zu haben. Sie kann auch sozusagen von den Wänden einer halben Nut gebildet sein.

Gemäß Fig. 7 enthält das Unterteil 2 in den Seitenwänden 6, 7, 8, 9 an deren oberem Ende keine vollständige Nut, sondern lediglich eine zum Inneren hin offene und um den Inneraum durchgehend umlaufende Stufe 51. Diese Stufe 51 setzt sich zusammen aus einer geraden schrägen Seitenfläche 52, die von der Stirnfläche 12 ausgeht und bei 53 in eine ebene ringförmige plane Schulter 54 übergeht, die längs aller Seitenwände 6, 7, 8, 9 umläuft, ebenso wie die Seitenfläche 52. Die Seitenfläche 52 ist, wie gezeigt, geneigt, d.h. sie bildet im weitestens Sinne einen Ausschnitt eines zum Boden 5 hin zeigenden Trichters.

Das Gehäuseoberteil 3 ist an seiner Stirnfläche 29 vollständig eben und glatt, mit Ausnahme einer Nut 55, in die gegebenenfalls eine Rundschnurdichtung 56 eingelegt ist. Die Außenabmessungen des Gehäuseoberteils 3 sind so, daß es, wie gezeigt, mit seiner Stirnfläche 29 auf die Schulter 54 aufgestellt werden kann, ohne hierdurch mit der Seitenwand 52 zu kollidieren.

Fig. 7 zeigt auf der linken Seite das geschlossene Gehäuse und wie dort zu erkennen ist, bildet die schräge Seitenfläche 52 zusammen mit einem kurzen Abschnitt der Schulter 53 und dem der schrägen Seitenfläche 52 gegenüberliegenden Bereich der Seitenwände 24, 25, 26, 27 des Gehäuseoberteils 3 eine nach oben offene V-förmige Nut. Diese Nut wird bei dem fertigen Gehäuse von einer Beschichtung 37 ausgefüllt.

Die Herstellung des Gehäuses nach Fig. 7 geschieht wie folgt:

Die Gehäuseteile 2 und 3 werden, wie oben beschrieben, hergestellt. Sodann wird ein Gehäuseunterteil 3 an der Seitenfläche 52 und auf der Schulter 54 mit einem Trennmittel behandelt. Das Gehäuseoberteil 3 wird an seiner Außenseite in dem Bereich, der der Seitenwand 52 gegenüberliegt, in einer Weise vorbereitet, daß die Beschichtung 37 im ausgehärteten Zustand eine stoffschlüssige Verbindung mit dem Gehäuseoberteil 3 eingeht. Sodann wird in die eventuell vorhandene Nut 55 die Dichtschnur 56 eingelegt und das Gehäuseoberteil 3, wie Fig. 7 auf der linken Seite zeigt, in das Gehäuseunterteil 2 hineingestellt. Durch nicht erkennbare Maßnahmen werden die beiden Gehäuseteile 2, 3 an der Stirnfläche 29 und der Schulter 54 zusammengepreßt, um einen dichten Abschluß zu bekommen. Anschließend wird ein vorzugsweise dünnflüssiges Kunstharz in die zwischen dem Gehäuseoberteil 3 und dem Gehäuseunterteil 2 gebildete, nach oben außen offene Nut eingefüllt. Die Kunststoffmasse läßt man ausreagieren, bis sie vollständig durchgehärtet ist. Anschließend kann das Gehäuse wieder geöffnet werden.

Nach dem Aushärten bildet die eingefüllte Kunststoffmasse die bereits beschriebene Beschichtung 37, die fest auf der Außenseite des Gehäuseoberteils 3 haftet. Fig. 7 läßt den geöffneten Zustand des Gehäuses 1 auf der rechten Seite erkennen.

Die so auf das Gehäuseoberteil 3 aufgebrachte Beschichtung 37 stellt eine exakte Negativabformung der Seitenwand 52 dar. Im geschlossenen Zustand bildet die Seitenwand 52 zusammen mit der anliegenden Fläche der Beschichtung 37 den vorschriftsmäßigen "Ex-Spalt".

Das Kunststoffgehäuse 1 nach Fig. 7 kann in der gleichen Weise beliebig oft geöffnet und geschlossen werden wie das Gehäuse nach den Fig. 1 bis 6.

Da in Fig. 7 lediglich die für die Erfindung wesentlichen Unterschiede zu dem vorherigen Ausführungsbeispiel gezeigt sind, sind die selbstverständlich vorhandenen Befestigungseinrichtungen, die dazu dienen, das Gehäuse 1 in der geschlossenen Stellung zu halten, nicht mit gezeigt.

Falls die Verankerung der Beschichtung 37 auf dem Gehäuseteil, auf dem es stoffschlüssig haftet, weiter verbessert werden soll, ist es auch möglich, in der betreffenden Gehäusefläche entsprechende Strukturelemente, beispielsweise Rinnen und Nuten, mit oder ohne Hinterschneidung, anzuordnen, in denen sich die Beschichtung 37 zusätzlich verankern kann. Die andere Fugenfläche, mit der die Beschichtung 37 nicht stoffschlüssig verbunden ist, bleibt hingegen frei von solchen Hinterschneidungen, um den Öffnungsvorgang nicht zu behindern. Die in Fig. 7 gezeigte Schräge der Seitenfläche 52 erleichtert das Öffnen und Schließen des Gehäuses.

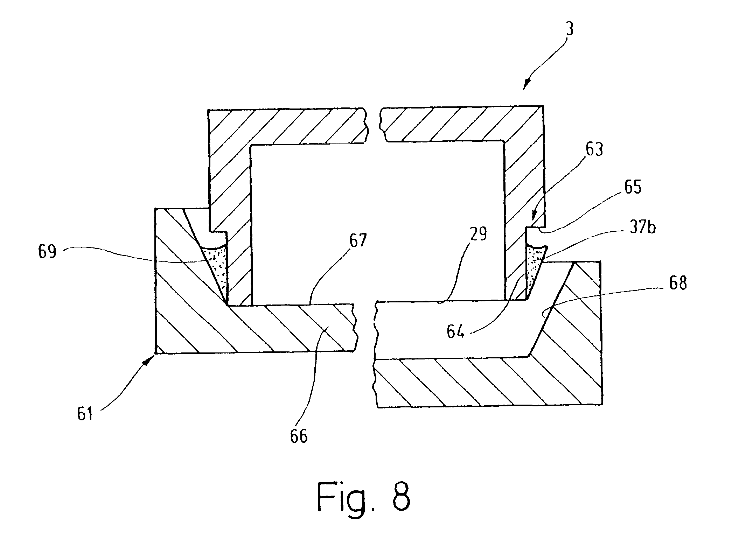

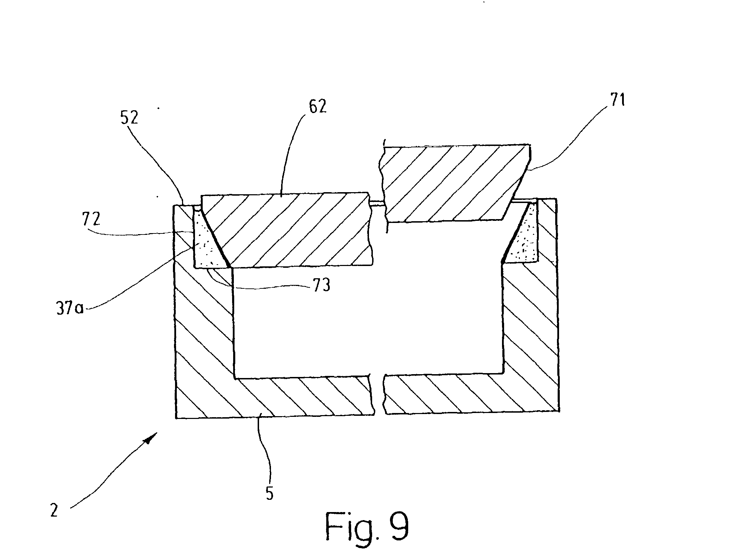

Schließlich ist es, wie die Fig. 8 und 9 zeigen, noch möglich, mit Hilfe von Vorformen 61 und 62 an beiden Gehäuseteilen 2 und 3 jeweils eine Beschichtung 37a und 37b herzustlelen.

An dem Gehäuseoberteil 3 wird ein von der Stirnfläche 29 ausgehender umlaufender Falz- oder Rücksprung 63 vorgesehen, der nach Außen zeigt. Der Rücksprung 63 besteht aus einer zu der Stirnfläche 29 führenden Seitenfläche 64 und einer darüber befindlichen Schulter 65. Die Vorform 61, mit der die Beschichtung 37b hergestellt wird, hat eine Gestalt wie das obere Ende des Gehäuseunterteils 2 nach Fig. 7. Sie besteht aus einem Boden 66 mit einer ebenen Oberseite 67, von der eine schräg nach außen geneigte umlaufende Wandanordnung 68 ausgeht. Die Wandanordnung 68 folgt im wesentlichen der Kontur des Grundrisses des Gehäuseoberteils 3.

Die Anbringung der Beschichtung 37b geschieht in der Weise, daß das Gehäuseoberteil 3 gemäß Fig. 8 linke Seite in die Vorform 61 hineingestellt wird. Die zwischen der Seitenwandanordnung 68 und der Seitenfläche 64 begrenzte Nut wird mit einer vorzugsweise dünnflüssigen Kunstharzmasse gefüllt, wie dies bei 69 gezeigt ist. Diese Kunstharzmasse läßt man ausreagieren, bis sie sich verfestigt und mit dem Gehäuseoberteil stoffschlüssig verbunden hat. Sodann wird das Gehäuseoberteil 3 aus der Vorform 61 herausgehoben, wobei die Beschichtung 37b an dem Gehäuseoberteil 3 stoffschlüssig haften bleibt und sich von der Seitenwandanordnung 68 der Vorform 61 trennt.

Zur Anbringung der Beschichtung 37a an dem Gehäuseunterteil 2 dient die Vorform 62, die im wesentlichen die Gestalt einer dicken Platte hat und seitlich von einer Seitenwandanordnung 71 begrenzt ist. Die Seitenwandanordnung 71 paßt exakt in die Seitenwandanordnung 68 der Vorform 61, und zwar so, daß wenn die Vorform 62 in die Vorform 61 eingelegt ist, die beiden Seitenwandanordnungen 68 und 71 einen Spalt begrenzen, der die Bedingungen des "Ex-Spaltes" erfüllt.

Das Gehäuseunterteil 2 :ist im Bereich seiner Stirnfläche 12 mit einem nach innen offenen Falz versehen, der von einer zu dem Boden 5 senkrechten Seitenfläche 72 und einer Schulter 73 begrenzt ist.

Zur Herstellung der Beschichtung 37a wird die Vorform 62 auf die Schulter 73 aufgelegt und dort festgehalten. Hierdurch wird eine nach oben sich verjüngende, im Querschnitt dreieckförmige Nut zusammen mit dem Rest der Schulter 73 und der Wand 72 begrenzt. Diese Nut wird anschließend mit einer dünnflüssigen Kunstharzmasse gefüllt. Nach dem Füllen der Nut wartet man, bis die Kunstharzmasse ausreagiert hat. Anschließend wird die Vorform 62 aus dem Gehäuseunterteil 2 herausgenommen, wobei die Beschichtung 37a stoffschlüssig an dem Gehäuseunterteil 2 haften bleibt, und zwar an der Schulter 73 und der Wand 72.

Das Herausheben der Vorform 62 zeigt Fig. 9 auf der rechten Seite.

Da die beiden Vorformen 61 und 62 unter Ausbildung eines "Ex-Spaltes" ineinander gepaßt haben, werden nach der Fertigstellung auch das Gehäuseoberteil 3 und das Gehäuseunterteil 2 so zusammenpassen, daß die freien Flächen der Beschichtungen 37a und 37b unter Ausbildung eines "Ex-Spaltes" aufeinanderliegen.

Der Fertigungsaufwand für ein Gehäuse gemäß den Fig. 8 und 9 ist etwas größer, da präzise vorgefertige Vorformen 61 und 62 benötigt werden. Dafür hat das Verfahren den Vorteil, daß die gewonnenen Gehäuseoberteile und Gehäuseunterteile beliebig miteinander gepaart werden können.

Bei einem aus Kunststoff bestehenden Gehäuse in der Zündschutzart "Druckfeste Kapselung" ist ein Teil des Gehäuses an der Trennfuge mit einer ersten Fugenfläche z.B. einer Nut und der andere Gehäuseteil mit einer zweiten Fugenfläche z.B. einer Rippe versehen. Die Querschnittsabmessungen der Nut sind größer als die Querschnittsabmessungen der Rippe. Der dadurch entstehende spaltförmige Raum wird mit einer Beschichtung ausgefüllt, die entweder an der Rippe oder an den Wänden der Nut stoffschlüssig haftet. Hierdurch kommt zwischen der Beschichtung und dem anderem Teil, an dem sie nicht stoffschlüssig haftet, ein Spalt zustande, der die Forderung erfüllt, die an einen "Ex-Spalt" eines druckfesten Gehäuses gestellt sind.

## Patentansprüche

1. Wieder zu öffnendes Gehäuse (1) aus Kunststoff in der Zündschutzart "Druckfeste Kapselung",
mit einem ersten Gehäuseteil (2),
mit einem zusammen mit dem ersten Gehäuseteil (2) einen druckfest gekapselten Gehäuseinnenraum umgrenzenden zweiten Gehäuseteil (3), und
mit einer einen Ex-Spalt bildenden Trennfuge (4) zwischen dem Gehäuseteilen (2,3),
zu der eine an einem der Gehäuseteile (2,3) ausgebildete erste Fugenfläche und
eine in der geschlossenen Stellung des Gehäuses (1) mit der ersten Fugenfläche zusammenwirkende zweite Fugenfläche gehören, die an dem anderen der Gehäuseteile (2,3) ausgebildet ist, und
mit einer Beschichtung (37),
die mit einer der Fugenflächen stoffschlüssig verbunden ist,
deren andere freie Fläche eine Negativabformung des jeweils anderen Teils der Trennfuge (4) darstellt und
die im geschlossenen Zustand des Gehäuses (1) einen bei fehlender Beschichtung (37) konstruktiv vorhandenen spaltförmigen Raum zwischen den Fugenflächen ausfüllt.

2. Wieder zu öffnendes Gehäuse (1) aus Kunststoff in der Zündschutzart "Druckfeste Kapselung",
mit einem ersten Gehäuseteil (2),
mit einem zusammen mit dem ersten Gehäuseteil (2) einen druckfest gekapselten Gehäuseinnenraum umgrenzenden zweiten Gehäuseteil (3), und
mit einer einen Ex-Spalt bildenden Trennfuge (4) zwischen dem Gehäuseteilen (2,3),
zu der eine an einem der Gehäuseteile (2,3) ausgebildete erste Fugenfläche und
eine in der geschlossenen Stellung des Gehäuses (1) mit der ersten Fugenfläche zusammenwirkende zweite Fugenfläche gehören, die an dem anderen der Gehäuseteile (2,3) ausgebildet ist, sowie
mit einer ersten Beschichtung (37b),
die mit der ersten Fugenflächen stoffschlüssig verbunden ist und
eine von der Fugenfläche wegweisende freie Fläche aufweist, die eine Negativabformung einer ersten Vorform (61) darstellt, sowie
mit einer zweiten Beschichtung (37a),
die mit der zweiten Fugenflächen stoffschlüssig verbunden ist und
eine von der Fugenfläche wegweisende freie Fläche aufweist, die eine Negativabformung einer zweiten Vorform (62) darstellt, wobei die beiden Vorformen (61,62) unter Ausbildung eines Ex-Spalts ineinanderpassen.

3. Gehäuse nach Anspruch 1, **dadurch gekennzeichnet, daß** die erste Fugenfläche in Längsrichtung U- bzw V-förmig gefaltet ist derart, daß die erste Fugenfläche Wände (14,15) und Boden (16) einer Nut (13) bildet, die in Längsrichtung der Trennfuge (4) läuft.

4. Gehäuse nach Anspruch 1, **dadurch gekennzeichnet, daß** die zweite Fugenfläche in Längsrichtung U- bzw V-förmig gefaltet ist, derart, daß die zweite Fugenfläche Wände (34,35) und Stirnwand (36) einer Rippe (31) bildet, die in Längsrichtung der Trennfuge (4) läuft.

5. Gehäuse nach Anspruch 1, **dadurch gekennzeichnet, daß** die Rippe (31) in die Nut (13) paßt und bei geschlosenem Gehäuse (1) in die Nut (13) eintaucht.

6. Gehäuse nach Anspruch 4, **dadurch gekennzeichnet, daß** die Beschichtung (37) mit den Wänden (34,35,36) der Rippe (31) stoffschlüssig verbunden ist.

7. Gehäuse nach Anspruch 3, **dadurch gekennzeichnet, daß** die Beschichtung (37) mit den Wänden (14,15,16) der Nut (13) stoffschlüssig verbunden ist.

8. Gehäuse nach Anspruch 1 oder 2, **dadurch gekennzeichnet, daß** an derjenigen Fugenfläche mit der die Beschichtung stoffschlüssig verbunden ist Mittel vorgesehen sind, die zusätzlich zusätzlich einen Formschluß mit der Beschichtung (37) ergeben.

9. Gehäuse nach Anspruch 1 oder 2, **dadurch gekennzeichnet, daß** die Beschichtung (37) aus einer aushärtbaren Masse (47) besteht.

10. Gehäuse nach Anspruch 9, **dadurch gekennzeichnet, daß** die Beschichtung (37) aus einem Kunstharz besteht, das aus einer Gruppe ausgewählt ist, zu der Epoxidharz, Polyurethan, Polyesterharz und andere Kustharze gehören.

11. Gehäuse nach Anspruch 10, **dadurch gekennzeichnet, daß** das Kunstharz vor dem Aushärten flüssig ist.

12. Gehäuse nach Anspruch 1 oder 2, **dadurch gekennzeichnet, daß** diejenige Fläche der Trennfuge (4), die die Beschichtung (37) stoffschlüssig trägt, aufgerauht ist.

13. Gehäuse nach Anspruch 1 oder 2, **dadurch gekennzeichnet, daß** diejenige Fläche der Trennfuge (4), die die Beschichtung (37) stoffschlüssig trägt, gestrahlt ist.

14. Gehäuse nach Anspruch 3, **dadurch gekennzeichnet, daß** die Nut (13) eine in sich geschlossene Rinne bildet.

15. Gehäuse nach Anspruch 3, **dadurch gekennzeichnet, daß** die Nut (13) eine Rinne bildet, die in einer Ebene liegt.

16. Gehäuse nach Anspruch 1 oder 2, **dadurch gekennzeichnet, daß** an einem der Gehäuseteile (2,3) Gewindebohrungen (22) für Schrauben (45) und an dem jeweils anderen Gehäuseteil (2,3) mit den Gewindebohrungen (22) fluchtende Durchgangsbohrungen (38) vorgesehen sind.

17. Gehäuse nach Anspruch 16, **dadurch gekennzeichnet, daß** sich die Gewindebohrungen (22) außerhalb eines von der Fugenfläche (13) umgrenzten Bereichs befinden.

18. Gehäuse nach Anspruch 17, **dadurch gekennzeichnet, daß** die Gewindebohrungen (22) Sackbohrungen sind.

19. Gehäuse nach Anspruch 1, **dadurch gekennzeichnet, daß** zumindest diejenige Fläche der Trennfuge (4), die nicht stoffschlüssig mit der Beschichtung (37) versehen ist, frei von Hinterschneidungen ist.

20. Gehäuse nach Anspruch 1, **dadurch gekennzeichnet, daß** zumindest diejenige Fläche der Trennfuge (4), die nicht stoffschlüssig mit der Beschichtung (37) versehen ist, schräge Flanken (14,15;34,35) aufweist.

21. Verfahren zur Herstellung des Gehäuses (1) nach Anspruch 1 und einem oder mehreren darauf zurückbezogenen Ansprüchen, **dadurch gekennzeichnet,**
**daß** die Gehäuseteile (2,3) in die Stellung für das geschlossenen Gehäuse (1) gebracht werden, in der zwischen den benachbarten Gehäuseflächen ein Spalt entsteht, der sich nach oben öffnet,
**daß** der Spalt mit einer fließfähigen Masse (47) gefüllt wird,
**daß** man die fließfähige Masse (47) sich verfestigen läßt und
**daß** das Gehäuse (1) zumindest solange geschlossen gehalten wird bis die fließfähige Masse (47) sich ausreichend verfestig hat.

22. Verfahren zur Herstellung des Gehäuses (1) nach Anspruch 2 und einem oder mehreren darauf zurückbezogenen Ansprüchen, **dadurch gekennzeichnet,**
**daß** eine Vorform (61,62) bereitgestellt wird,
**daß** das betreffende Gehäuseteil (2,3) mit der Vorform (61,62) zusammengefügt wird, wobei sich zwischen der Gehäusefläche und der Vorform (61,62) ein Spalt bildet,
**daß** der Spalt mit einer fließfähigen Masse (47) gefüllt wird,
**daß** man die fließfähige Masse (47) sich verfestigen läßt und
**daß** das Gehäuse (1) zumindest solange mit der Vorform (61,62) zusammenbleibt, bis die fließfähige Masse (47) sich ausreichend verfestig hat.

23. Verfahren zur Herstellung des Gehäuses (1) nach Anspruch 3 und einem oder mehreren damit kombinierbaren Ansprüchen, **dadurch gekennzeichnet,**
**daß** das Gehäuseteil (2,3) mit der Nut (13) in eine Position gebracht wird, in der die Nut (13) sich nach oben öffnet,
**daß** die Nut (13) mit einer fließfähigen Masse (47) gefüllt wird,
**daß** das Gehäuse (1) durch Aufsetzen des anderen Gehäuseteils (2,3) geschlossen wird
**daß** man die fließfähige Masse (47) sich verfestigen läßt und
**daß** das Gehäuse (1) zumindest solange geschlossen gehalten wird bis die fließfähige Masse (47) sich ausreichend verfestig hat.

24. Verfahren nach Anspruch 1, **dadurch gekennzeichnet, daß** eine der beiden Gehäusewände mit einem Trennmittel beschichtet ist, an dem die fließfähige Masse (47) zumindest nach dem Verfestigen nicht anhaftet, um eine stoffschlüssige Verbindung zu verhindern.

25. Verfahren nach Anspruch 1, **dadurch gekennzeichnet, daß** eine der beiden Gehäusewände in einer Weise vorbehandelt ist, daß die fließfähige Masse (47) mit diesen Wänden (14,15,16;34,35,36) eine stoffschlüssige Verbindung eingeht.

26. Verfahren nach Anspruch 1, **dadurch gekennzeichnet, daß** eine der beiden Gehäusewände zumindest in einem Bereich mit einem Haftvermittler beschichtet sind.

27. Verfahren nach Anspruch 1, **dadurch gekennzeichnet, daß** eine der beiden Gehäusewände in einem entsprechenden Bereich, der später die Beschichtung (37) tragen soll aufgerauht sind, vorzugsweise durch Strahlen.

28. Verfahren nach Anspruch 1, **dadurch gekennzeichnet, daß** die Gehäuseteile (2,3) nach dem Schließen des Gehäuses (1) mittels der Gehäuseschrauben (45) miteinander in derselben Weise verschraubt werden, wie beim späteren Einsatz, und wenigsten solange verschraubt bleiben, bis sich die fließfähige Masse (47) verfestigt hat.

29. Verfahren nach Anspruch 1, **dadurch gekennzeichnet, daß** die Gehäuseteile (2,3) als zusammengehörig **gekennzeichnet** werden.

## Claims

1. Reopenable plastic housing (1) of the protection type "flameproof enclosure",
with a first housing part (2),
with a second housing part (3) defining a flameproof enclosed housing interior together with the first housing part (2), and
with a parting seam (4) forming an ex-gap between the housing parts (2, 3),
to which a first seam face formed on one of the housing parts (2, 3) and
a second seam face formed on the other housing part (2, 3) and cooperating with the first seam face in the closed position of the housing (1), belong and
with a coating (37),
which is joined in substance to one of the seam faces,
the other free face thereof constituting a negative shape of the respective other part of the parting seam (4), and
which, when the housing (1) is in closed position, fills a gap-like space between the seam faces present in the structure in the absence of a coating (37).

2. Reopenable plastic housing (1) of the protection type "flameproof enclosure",
with a first housing part (2),
with a second housing part (3) defining a flameproof enclosed housing interior together with the first housing part (2), and
with a parting seam (4) forming an ex-gap between the housing parts (2, 3),
to which a first seam face formed on one of the housing parts (2, 3) and
a second seam face formed on the other housing part (2, 3) and cooperating with the first seam face in the closed position of the housing (1), belong, and also
with a first coating (37b),
which is joined in substance to the first seam faces and has a free face pointing away from the seam face which constitutes a negative shape of a first preform (61), and also
with a second coating (37a),
which is joined in substance to the second seam faces and has a free face pointing away from the seam face which constitutes a negative shape of a second preform (62), the two preforms (61, 62) fitting together to form an ex-gap.

3. Housing according to Claim 1, **characterised in that** the first seam face is folded in longitudinal direction into a U or V shape in such a manner that the first seam face forms walls (14, 15) and base (16) of a groove (13) which runs in the longitudinal direction of the parting seam (4).

4. Housing according to Claim 1, **characterised in that** the second seam face is folded in longitudinal direction into a U or V shape in such a manner that the second seam face forms walls (34, 35) and face wall (36) of a rib (31) which runs in the longitudinal direction of the parting seam (4).

5. Housing according to Claim 1, **characterised in that** the rib (31) fits into the groove (13) and penetrates into the groove (13) when the housing (1) is closed.

6. Housing according to Claim 4, **characterised in that** the coating (37) is joined in substance to the walls (34, 35, 36) of the rib (31).

7. Housing according to Claim 3, **characterised in that** the coating (37) is joined in substance to the walls (14, 15, 16) of the groove (13).

8. Housing according to Claim 1 or 2, **characterised in that** means, which additionally provide a form closure with the coating (37), are provided on the seam face, to which the coating is joined in substance.

9. Housing according to Claim 1 or 2, **characterised in that** the coating (37) is made of a hardenable mass (47) .

10. Housing according to Claim 9, **characterised in that** the coating (37) is made of a synthetic resin selected from the group comprising epoxy resin, polyurethane, polyester resin and other synthetic resins.

11. Housing according to Claim 10, **characterised in that** the synthetic resin is liquid before hardening.

12. Housing according to Claim 1 or 2, **characterised in that** the face of the parting seam (4), which bears the coating (37) joined in substance is roughened.

13. Housing according to Claim 1 or 2, **characterised in that** the face of the parting seam (4), which bears the coating (37) joined in substance is blasted.

14. Housing according to Claim 3, **characterised in that** the groove (13) forms an enclosed channel.

15. Housing according to Claim 3, **characterised in that** the groove (13) forms a channel, which lies in one plane.

16. Housing according to Claim 1 or 2, **characterised in that** threaded holes (22) are provided for screws (45) on one of the housing parts (2, 3) and on the respective other housing part (2, 3) through-holes (38) are provided flush with the threaded holes (22).

17. Housing according to Claim 16, **characterised in that** the threaded holes (22) are located outside a region bordered by the seam face (13).

18. Housing according to Claim 17, **characterised in that** the threaded holes (22) are blind holes.

19. Housing according to Claim 1, **characterised in that** at least the face of the parting seam (4), which is not provided with the coating (37) joined in substance, is free from undercuts.

20. Housing according to Claim 1, **characterised in that** at least that face of the parting seam (4), which is not provided with the coating (37) joined in substance, has sloping flanks (14, 15; 34, 35).

21. Process for the production of the housing (1) according to Claim 1 and one or more claims referring back thereto, **characterised in that**
the housing parts (2, 3) are brought into the position for the closed housing (1), in which a gap, which opens upwards, is formed between the adjacent housing faces; that the gap is filled with a flowable mass (47); that the flowable mass (47) may be solidified; and
that the housing (1) is kept closed at least until the flowable mass (47) has solidified sufficiently.

22. Process for the production of the housing (1) according to Claim 1 and one or more claims referring back thereto, **characterised in that**
a preform (61, 62) is provided;
that the respective housing part (2, 3) is joined together with the preform (61, 62), in which case a gap forms between the housing face and the preform (61, 62); that the gap is filled with a flowable mass (47);
that the flowable mass (47) is allowed to solidify; and
that the housing (1) remains joined with the preform (61, 62) at least until the flowable mass (47) has solidified sufficiently.

23. Process for the production of the housing (1) according to Claim 3 and one or more claims which may be combined therewith, **characterised in that**
that the housing part (2, 3) with the groove (13) is brought into a position, in which the groove (13) opens upwards;
that the groove (13) is filled with a flowable mass (47); that the housing (1) is closed by attaching the other housing part (2, 3);
that the flowable mass (47) is allowed to solidify; and
that the housing (1) is kept closed at least until the flowable mass (47) has solidified sufficiently.

24. Process according to Claim 21, **characterised in that** one of the two housing walls is coated with a release agent, to which at least after solidification the flowable mass (47) does not adhere, in order to prevent a connection in substance.

25. Process according to Claim 21, **characterised in that** one of the two housing walls is pretreated in such a manner that the flowable mass (47) forms a connection in substance with these walls (14, 15, 16; 34, 35, 36).

26. Process according to Claim 21, **characterised in that** one of the two housing walls is coated at least in one region with an adhesion promoter.

27. Process according to Claim 21, **characterised in that** one of the two housing walls is roughened, preferably by blasting, in a corresponding region, which is later to bear the coating (37).

28. Process according to Claim 21, **characterised in that** after closure of the housing (1), the housing parts (2, 3) are screwed together by means of the housing screws (45) in the same manner as in the subsequent insertion and remain screw-connected at least until the flowable mass (47) has solidified.

29. Process according to Claim 21, **characterised in that** the housing parts (2, 3) are marked as belonging together.

## Revendications

1. Boîtier (1) pouvant être ouvert, en matière plastique, anti-étincelle, de type à « blindage étanche »
avec une première partie de boîtier (2),
avec une deuxième partie de boîtier (3) qui, avec la première partie de boîtier (2), délimite une chambre de boîtier intérieure encapsulée, antidéflagrante et
avec une ligne de séparation (4) qui forme une fente anti-explosion entre les parties de boîtier (2, 3) et comprend
une première surface de séparation aménagée sur l'une des parties de boîtier (2. 3) et
une deuxième surface de séparation aménagée sur l'autre des parties de boîtier (2, 3), qui coopère avec la première surface de séparation dans
la position fermée du boîtier (1), et
avec un revêtement (37)
qui est lié par matière à l'une des surfaces de séparation,
dont l'autre surface libre représente une empreinte négative de l'autre partie de la ligne de séparation (4) et
qui, dans la position fermée du boîtier (1), remplit un espace en forme de fente, venu de construction, entre les surfaces de séparation en l'absence de revêtement (37).

2. Boîtier (1) pouvant être ouvert, en matière plastique, anti-étincelle, de type à « blindage étanche » avec une première partie de boîtier (2),
avec une deuxième partie de boîtier (3) qui, avec la première partie de boîtier (2), délimite une chambre de boîtier intérieure encapsulée, antidéflagrante et
avec une ligne de séparation (4) qui forme une fente anti-explosion entre les parties de boîtier (2, 3) et comprend
une première surface de séparation aménagée sur l'une des parties de boîtier (2. 3) et
une deuxième surface de séparation aménagée sur l'autre des parties de boîtier (2, 3), qui coopère avec la première surface de séparation dans la position fermée du boîtier (1),
**caractérisé en ce que** le boîtier est pourvu
d'un premier revêtement (37b)
qui est lié par matière à la première surface de séparation, et
présente une surface libre éloignée de la surface de séparation, qui représente une empreinte négative d'une première préforme (61) et avec un deuxième revêtement (37a)
qui est lié par matière à la deuxième surface de séparation, et
présente une surface libre éloignée de la surface de séparation, qui représente une empreinte négative d'une deuxième préforme (62), les deux préformes (61, 62) s'emboîtant l'une dans l'autre pour former une fente anti-déflagrante.

3. Boîtier selon la revendication 1, **caractérisé en ce que** la première surface de séparation est pliée en U ou en V dans la direction longitudinale, de manière telle que la première surface de séparation forme les parois (14, 15) et le fond (16) d'une rainure (13) qui s'étend dans la. direction longitudinale de la ligne de séparation (4).

4. Boîtier selon la revendication 1, **caractérisé en ce que** la. deuxième surface de séparation est pliée en U ou en V dans la direction longitudinale, de manière telle que la deuxième surface de séparation forme les parois (34, 35) et la paroi frontale (36) d'une nervure (31) qui s'étend dans la direction longitudinale de la ligne de séparation (4).

5. Boîtier selon la revendication 1, **caractérisé en ce que** la nervure (31) est adaptée à la rainure (13) et s'engage dans la rainure (13) lorsque le boîtier (1) est fermé.

6. Boîtier selon la revendication 4, **caractérisé en ce que** le revêtement (37) est lié par matière aux parois (34, 35, 36) de la nervure (31).

7. Boîtier selon la revendication 3, **caractérisé en ce que** le revêtement (37) est lié par matière aux parois (14, 15, 16) de la rainure (13).

8. Boîtier selon la revendication 1 ou 2, **caractérisé en ce qu'**il est prévu sur la surface de séparation à laquelle le revêtement est lié par matière, des moyens qui forment en outre une liaison par complémentarité de formes avec le revêtement (37).

9. Boîtier selon la revendication 1 ou 2, **caractérisé en ce que** le revêtement (37) est formé d'une masse (47) durcissable.

10. Boîtier selon la revendication 9, **caractérisé en ce que** le revêtement (37) est formé d'une résine synthétique choisie parmi un groupe faisant partie des résines époxydes, des polyuréthanes, des résines polyester et d'autre résines synthétiques.

11. Boîtier selon la revendication 10, **caractérisé en ce que** la résine synthétique, avant durcissement, est liquide.

12. Boîtier selon la revendication 1 ou 2, **caractérisé en ce que** la surface de la ligne de séparation (4) qui porte le revêtement (37) lié par matière est rendue rugueuse.

13. Boîtier selon la revendication 1 ou 2, **caractérisé en ce que** la surface de la ligne de séparation (4) qui porte le revêtement (37) lié par matière est soumise à un sablage.

14. Boîtier selon la revendication 3, **caractérisé en ce que** la rainure (13) forme une rigole fermée sur elle-même.

15. Boîtier selon la revendication 3, **caractérisé en ce que** la rainure (13) forme une rigole qui est située dans un plan.

16. Boîtier selon la revendication 1 ou 2, **caractérisé en ce qu'**il est prévu sur l'une des parties de boîtier (2, 3), des trous filetés (22) pour des vis (45) et sur l'autre partie de boîtier (3, 2) des trous traversants (38) qui sont alignés avec les trous filetés (22).

17. Boîtier selon la revendication 16, **caractérisé en ce que** les trous filetés (22) sont situés en dehors d'une zone délimitée par la surface de séparation (13).

18. Boîtier selon la revendication 17, **caractérisé en ce que** les trous filetés (22) sont des trous borgnes.

19. Boîtier selon la revendication 1, **caractérisé en ce qu'**au moins la surface de la ligne de séparation (4) qui ne comporte pas de revêtement (37) lié par matière ne comporte pas de contre-dépouilles.

20. Boîtier selon la revendication 1, **caractérisé en ce qu'**au moins la surface de la ligne de séparation (4) qui ne comporte pas de revêtement (37) lié par matière présente des flancs (14, 15 ; 34, 35) inclinés.

21. Procédé de fabrication du boîtier (1) selon la revendication 1 et une ou plusieurs des revendications rattachées, **caractérisé en ce que**
• on amène les parties de boîtier (2, 3) dans la position pour le boîtier (1) fermé, dans laquelle il est formé entre les surfaces de boîtier voisines, une fente ouverte vers le haut,
• on remplit la fente avec une masse (47) coulable,
• on laisse la masse (47) coulable se solidifier et
• on maintient le boîtier (1) fermé au moins jusqu'à ce que la masse coulable (47) soit suffisamment solidifiée.

22. Procédé de fabrication du boîtier (1) selon la revendication 2 et une ou plusieurs des revendications rattachées, **caractérisé en ce que**
• on prépare une préforme (61, 62),
• on assemble la partie de boîtier 2, 3) concernée avec la préforme (61, 62), une fente étant formée entre la surface de boîtier et la préforme (61, 62),
• on remplit la fente avec une masse (47) coulable,
• on laisse la masse (47) coulable se solidifier et
• on maintient le boîtier (1) appliqué sur la préforme (61, 62) au moins jusqu'à ce que la masse coulable (47) soit suffisamment solidifiée.

23. Procédé de fabrication du boîtier (1) selon la revendication 3 et une ou plusieurs des revendications rattachées, **caractérisé en ce que**
• on amène la partie de boîtier (2, 3) portant la rainure (13) dans une position, dans laquelle la rainure (13) s'ouvre vers le haut,
• on remplit la rainure (13) avec une masse (47) coulable,
• on ferme le boîtier (1) en plaçant l'autre partie de boîtier (2, 3),
• on laisse la masse (47) coulable se solidifier et
• on maintient le boîtier (1) fermé au moins jusqu'à ce que la masse coulable (47) soit suffisamment solidifiée.

24. Procédé selon la revendication 1, **caractérisé en ce que** l'une des deux parois de boîtier est enduite d'un produit de démoulage sur lequel la masse coulable (47), au moins après solidification, n'adhère pas aux fins d'éviter une liaison par matière.

25. Procédé selon la revendication 1, **caractérisé en ce que** l'une des deux parois de boîtier est soumise à un prétraitement tel, que la masse coulable (47), se lie par matière avec les parois (14,15,16 ; 34, 35, 36).

26. Procédé selon la revendication 1, **caractérisé en ce que** l'une des deux parois de boîtier au moins est enduite d'un produit d'accrochage.

27. Procédé selon la revendication 1, **caractérisé en ce que** l'une des deux parois de boîtier, dans une zone correspondante, devant porter le revêtement (37) par la suite, est rendue rugueuse, de préférence par sablage.

28. Procédé selon la revendication 1, **caractérisé en ce que** les parties de boîtier (2, 3), après la fermeture du boîtier (1), sont vissées l'une avec l'autre à l'aide des vis (45) de la même manière que lors de l'utilisation ultérieure et restent vissées au moins jusqu'à ce que la masse coulable (47) soit solidifiée.

29. Procédé selon la revendication 1, **caractérisé en ce que** les parties de boîtier (2, 3), sont repérées en tant qu'éléments appairés.
